# EUROPÄISCHE PATENTSCHRIFT

(11) **EP 2 060 843 B1**
(45) Veröffentlichungstag und Bekanntmachung des Hinweises auf die Patenterteilung: **12.12.2012**
(21) Anmeldenummer: 08105575.8
(22) Anmeldetag: 15.10.2008
(51) Int. Cl.: F16L 59/14, F16L 59/153, B29C 44/12, B29C 44/32, B32B 1/08, B32B 15/08

(54) **Wärmeisoliertes Leitungsrohr und Verfahren zu dessen Herstellung**
Heat insulated pipe and method of its manufacturing
Tuyau isolé thermiquement et son procédé de fabrication

(30) Priorität: 14.11.2007 DE 102007054269
(43) Veröffentlichungstag der Anmeldung: 20.05.2009
(73) Patentinhaber: Jarus GmbH, 83135 Schechen (DE)
(72) Erfinder: Altenburger, Joseph, 83026 Rosenheim (DE); Schuster, Rudolf, 85551 Kirchheim (DE)
(74) Vertreter: Zeitler, Giselher

(56) Entgegenhaltungen:
- EP-A1- 0 634 602
- EP-A1- 0 897 788
- EP-A1- 1 288 558
- WO-A1-99/31446
- WO-A2-2004/039574
- DE-A1- 2 316 835
- DE-A1- 3 635 515
- DE-A1- 19 507 110
- DE-U1- 20 315 754
- US-B1- 6 623 413

## Beschreibung

Die Erfindung betrifft ein wärmeisoliertes Leitungsrohr und ein Verfahren zu dessen Herstellung nach dem Oberbegriff des Anspruchs 1 bzw. 7.

Aus der EP 0 897 788 B1 ist ein Verfahren zur Herstellung eines isolierten Leitungsrohrs bekannt. Dabei werden ein oder mehrere Innenrohre mit Abstand von einer zu einem Schlauch geformten Kunststofffolie umhüllt. In den Raum zwischen dem Innenrohr bzw. den Innenrohren und der Kunststofffolie wird ein aufschäumbarer Kunststoff eingebracht. Anschließend werden Innenrohr bzw. Innenrohre in ein aus mitlaufenden Formbackenhälften bestehendes Formwerkzeug eingefahren und ein Außenrohr aus Kunststoff auf den Schlauch aufgebracht. Da die Formbackenhälften auf den Innenseiten ein Wellenprofil aufweisen, ist auch das Außenrohr und der darunter befindliche aufschäumbare Kunststoff nach dem Austritt des Rohres aus dem Extruderwerkzeug mit einer gewellten Oberfläche versehen.

Der Sinn dieser gewellten Oberfläche ist in der EP 0 897 788 B1 nicht näher erläutert, doch dürfte er darin liegen, dass die Wellung es ermöglicht, das Leitungsrohr mit geringeren Krümmungsradien aufzurollen und zu verlegen.

Es hat sich nun gezeigt, dass diese Wellung diverse Nachteile aufweist. So wird durch eine gleichförmige Wellenform die Isolation unnötigerweise reduziert, was zu erhöhten Wärmeverlusten führt. Bei diese Art der Wellung kann es überdies zu Lufteinschlüssen zwischen Isolierung und Außenrohr sowie isolationsschädlichen Feuchtigkeitseinschlüssen kommen.

Ein wärmeisoliertes Leitungsrohr nach dem Oberbegriff des Anspruchs 1 ist bekannt aus der DE 203 15 754 U1.

Die Aufgabe der vorliegenden Erfindung besteht darin, die oben genannten Nachteile zu vermeiden und zusätzliche Vorteile zu erzielen.

Diese Aufgabe wird mit den kennzeichnenden Merkmalen des Anspruchs 1 bzw. 7 gelöst.

Es hat sich gezeigt, dass mit halbwellenartigen Vertiefungen folgende Vorteile erreichbar sind:

optimale Isolation, günstige Verarbeitungsmöglichkeit und wirtschaftliche Fertigung.

So hat die halbwellenartige Form bei gleicher Teilung und gleicher Einschnitttiefe einen kleineren Außendurchmesser bei gleicher Isolation. Sowohl die halbwellenartige Form als auch entsprechende Varianten haben eine längere Mantellinie, wodurch die Biegekraft beim Verlegen reduziert wird. Darüber hinaus kommt es im Vergleich zur bekannten Wellenform bei diesen Ausführungen zu weniger Lufteinschlüssen beim Aufbringen des Außenrohres. Bei einer mehrgängigen Ausführung, d.h. bei einer schraubenförmigen Anordnung der Vertiefungen sind zwei oder mehr Gewindegänge ineinander angeordnet, sind höhere Fertigungsgeschwindigkeiten zu erzielen, da der Querschnitt für das Aufsaugen des Außenrohres auf den Schaumkörper größer ist.

Mit den Merkmalen der untergeordneten Ansprüche sind zusätzliche Vorteile zu erreichen.

So lässt sich mit unterschiedlichen Verhältnissen H zu D nach Anspruch 2 und durch Wahl von E und A nach Anspruch 3 die Biegesteifigkeit für verschieden große Rohre optimieren, ebenso die Wärmeverluste durch Minimierung der Zahl der Vertiefungen.

Die Unterteilung der Vertiefungen in einen ringförmigen und einen schraubenförmigen Bereich nach Anspruch 4 ermöglicht es, die Lage von Mehrfachinnenrohren von außen zu erkennen und so die optimale Biegerichtung beim Aufrollen oder Verlegen des Rohres zu wählen. Die optimale Biegerichtung ist die um die Verbindungslinie zweier Innenrohre, da sich so die geringste Biegekraft und die geringste Beeinflussung des Abstandes der Innenrohre zueinander ergibt, was Einfluss auf die gegenseitige Beeinflussung der Rohre (Vorlauf, Rücklauf) und die Wärmeverluste nach außen hat. Weiterhin ist die Entformung der Formbackenhälften auch bei steilen Einschnitten sichergestellt. Ebenso wird eine preiswerte Herstellung der Formbacken durch Gießverfahren ermöglicht.

Wenn der Übergang vom ringförmigen auf den schraubenförmigen Bereich wie nach Anspruch 5 sinusartig ausgeführt wird, erreicht man eine preiswerte Herstellungsmöglichkeit eines Druckgusswerkzeuges für die Formbackenhälften mittels eines Fräswerkzeuges mit einem halbwellenförmigen Fräsbereich.

Mit Hilfe der Bemessungsregeln nach Anspruch 6 lässt sich die Verformung des Schaumkörpers durch den Hinterschnitt der Formbackenhälften beim Öffnen derselben vermeiden.

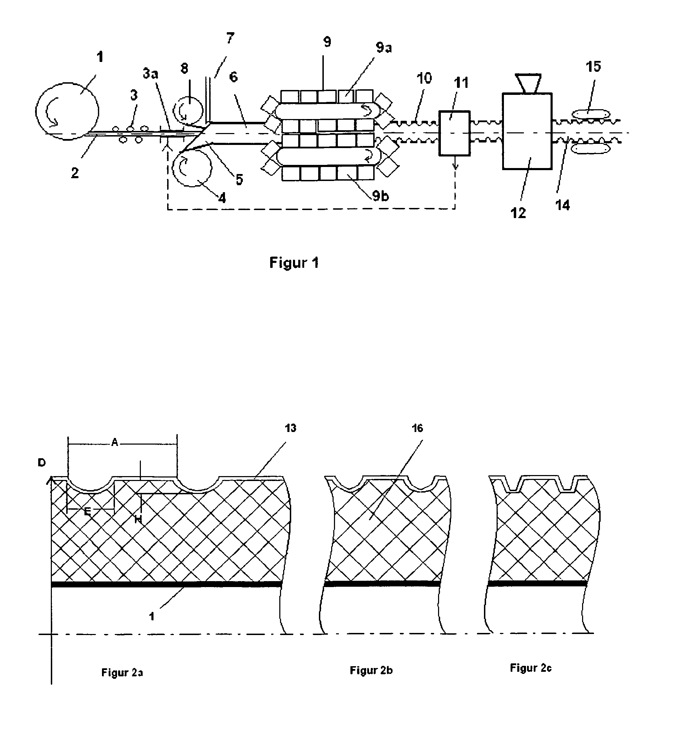

Die Erfindung ist anhand des in den Figuren 1 bis 4 dargestellten Ausführungsbeispiels näher erläutert.

In Figur 1 ist eine Anordnung zur Herstellung eines wärmeisolierten Leitungsrohres dargestellt, bei der die Erfindung angewendet werden kann.

Von einer Vorratstrommel 1 wird kontinuierlich ein Innenrohr 2 abgezogen. Das Innenrohr ist vorzugsweise ein vernetztes Polyethylenrohr, in dessen Wandung eine Schicht aus Polyvinylalkohol eingebettet ist. Bei Metallausführung wird das Innenrohr 2 wird durch einen Richtrollensatz 3 geführt, um Verbiegungen des Innenrohres zu entfernen. Der Richtrollensatz 3 ist in zwei senkrecht aufeinanderstehenden Richtungen quer zur Fertigungsrichtung verschiebbar angeordnet.

Nahe dem Maschineneinlauf ist ein Führungsrohr 3a angeordnet, durch das das Innenrohr geführt wird. Das Führungsrohr 3a ist in beiden Achsen quer zur Rohrachse justierbar und wird von einer Detektoreinheit 11 gesteuert, die die zentrale Lage des Innenrohres in Bezug auf das fertige Leitungsrohr erfasst und bei Bedarf Korrektursteuersignale abgibt.

Von einer Vorratsspule 4 wird eine Folie 5 aus LLDPE abgezogen und um das Innenrohr 2 konzentrisch zu diesem zu einem Schlitzrohr 6 mit einer verklebten oder verschweißten Längsnaht geformt. In das noch offene Schlitzrohr 6 wird ein aufschäumbares Kunststoffgemisch auf Polyurethanbasis oder auf Polyethylenbasis eingebracht. Im Falle von Polyurethan wird ein Mischkopf 7 verwendet, aus welcher die miteinander vermischten Komponenten auf die Folie 5 aufgespritzt werden.

In das Schlitzrohr 6 können ggfs. Meldeadern 8 eingeführt werden.

Das geschlossene Rohr wird in ein Formwerkzeug 9 eingeführt, welches aus einer Vielzahl von Formbackenhälften 9a und 9b besteht, die gemeinsam eine auf zwei Seiten umlaufende Form für das mit der Wärmedämmschicht 16 und der Folie 5 versehene Innenrohr 2 bilden.

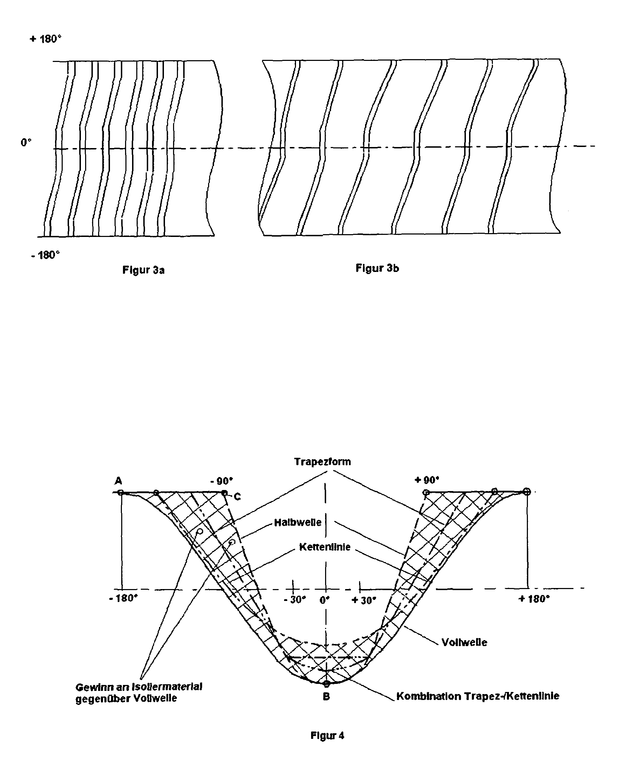

Die der Folie 5 zugekehrten Oberflächen der Formbackenhälften 9a und 9b weisen erfindungsgemäß ein halbwellenartig ausgebildetes Profil auf, in welches die Folie 5 infolge des Schäumdrucks eingeformt wird. Das aus dem Formwerkzeug 9 austretende Rohr 10 hat deshalb eine mit halbwellenartigen Vertiefungen versehene Oberfläche, wie sie in Figur 2 und 3 dargestellt ist.

Das Rohr 10 durchläuft dann eine Einrichtung 11, mit deren Hilfe das Rohr 10 kontinuierlich auf eine exakt zentrische Lage des Innenrohres 2 überprüft wird. Im Falle einer Abweichung wird das Führungsrohr 3a entsprechend verschoben. Auf das Rohr 10 wird dann mittels eines Extruders 12 ein Außenmantel 13 aus Kunststoff extrudiert, der sich unter Einwirkung eines Unterdrucks in die halbwellenartigen Vertiefungen des Rohres 10 einlegt. Der Außenmantel verklebt dabei aufgrund seiner durch die Extrusion erhaltenen hohen Temperatur mit der Kunststofffolie 5.

Nach der Abkühlung kann dann das fertige Rohr 14 kann dann mittels eines Bandabzuges 15 abgezogen und in einer geeigneten Einrichtung zu einem Ringbund geformt werden.

Alternativ kann das Rohr 14 auf eine nicht dargestellte Trommel aufgewickelt werden.

Die Figuren 2a, 2b und 2c zeigen nicht zur Erfindung gehörende, halbwellenartige Vertiefungen auf der Oberfläche des fertigen Leitungsrohres, die durch die entsprechende Ausbildung der Formbackenhälften 9a, 9b erzielt werden. Dabei können durch die Wahl der Größe der Vertiefung H und des Abstandes der Vertiefungen A die Parameter Biegesteifigkeit und Wärmeverluste optimiert werden.

Aus Figur 3a und 3b ist ersichtlich, wie der Übergang eines schraubenförmigen Bereichs S in einen ringförmigen Bereich R realisiert wird. Zur besseren Ansicht ist dazu eine Abwicklung der Leitungsrohroberfläche dargestellt. Der ringförmige Bereich tritt am Umfang des Leitungsrohres zweimal auf,da die Formbackenhälften 9a, 9b auf beiden Seiten des Formwerkzeuges 9 gleichartig ausgestaltet sind.

Durch die Lage des ringförmigen Bereichs auf dem fertigen Rohr kann jetzt die Lage des Innenrohres während der Aufwicklung oder der Verlegung erkannt werden, was besonders wichtig ist, wenn des Innenrohr aus mehreren Rohren besteht. Dies ist z.B. bei Wärmeversorgungsrohren mit Vorlauf und Rücklauf der Fall. Dadurch kann das Leitungsrohr so aufgewickelt bzw. verlegt werden, dass die optimale Biegerichtung eingehalten wird, ohne dass es zu Verschiebungen der Innenrohre innerhalb der Isolierung kommen kann.

In Figur 3b ist dargestellt, wie der Übergang vom ringförmigen Bereich R auf den schraubenförmigen Bereich S fließend erfolgt, indem dieser Übergang sinusbogenförmig gestaltet ist.

Damit erhält man die bereits oben beschriebenen Vorteile.

In Figur 4 ist dargestellt, wie die Vertiefungsformen Halbwelle (gestrichelt), Kettenlinie (Punkt-Strich) und Trapezform (Zweipunkt-Strich) ein günstigeres Verhalten bezüglich Isolierungsverlusten (mehr Isoliermaterial) und Länge der Mantellinie (Biegeverhalten, Lufteinschlüsse) gegenüber einer kosinusförmigen Wellenlinie (durchgezogene Linie) aufweisen. So zeigt der Vergleich der Länge der Mantellinien L(A-B) der Vollwelle und der Länge L(A-C-B) der Halbwelle bei gleicher Einschnitttiefe den Vorteil des Gewinns an Isoliermaterial bei zugleich kleinerer Biegesteifigkeit, da L(A-C-B) > L(A-B) ist.

Oberhalb des Punktes B in Figur 4 ist der Ersatz des kürzeren Teils der Trapezform durch eine Kettenlinie (Dreipunkt-Strich) nach der Erfindung dargestellt.

Insgesamt ist durch die Erfindung eine effizientere und kostengünstigere Herstellung von wärmeisolierten Leitungsrohren möglich, die zudem Vorteile in Hinblick auf die Lagerung und die Verarbeitung der Leitungsrohre bietet.

**Bezugszeichenliste :**

1 Vorratstrommel

2 Innenrohr

3 Richtrollensatz

3a Führungsrohr

4 Vorratsspule

5 Folie

6 Schlitzrohr

7 Mischkopf

8 Meldeadern

9 Formwerkzeug

9a,9b Formbackenhälften

10 Rohr

11 Detektoreinrichtung

12 Extruder

13 Außenmantel

14 Wärmeisoliertes Leitungsrohr

15 Bandabzug

16 Wärmedämmschicht

## Patentansprüche

1. Wärmeisoliertes Leitungsrohr, bestehend aus einem oder mehreren Innenrohren (1) aus Kunststoff oder Metall, einem Außenrohr (13) aus Kunststoff, sowie einer zwischen dem Innenrohr (1) und dem Außenrohr (13) befindlichen Wärmedämmschicht (16) auf der Basis von Kunststoffschaum, bei dem das Innenrohr ein Kunststoffrohr bzw. Metallrohr ist und wobei die Wärmedämmschicht (16) und das Außenrohr (13) eine ring- und/oder schraubenförmige Vertiefung im Außenmantel aufweisen,
wobei die Vertiefung der Wärmedämmschicht im Längsschnitt eine halbwellenartige Form aufweist, die im Wesentlichen einer Trapezform entspricht,
**dadurch gekennzeichnet, dass** die kürzere der Parallelen der Trapezform durch eine Kettenlinie ersetzt ist.

2. Wärmeisoliertes Leitungsrohr nach Anspruch 1, **dadurch gekennzeichnet, dass** die Tiefe der Vertiefung (H) und der Durchmesser des gesamten Leitungsrohres (D) vorzugsweise im Verhältnis 1 zu 50 bis 1 zu 100 steht.

3. Wärmeisoliertes Leitungsrohr nach einem der vorangehenden Ansprüche, **dadurch gekennzeichnet, dass** die Länge (E) der Vertiefung und die Teilung (A) der Vertiefungen auf dem Umfang des Rohres vorzugsweise im Verhältnis von E/A kleiner 1 zu 3 steht.

4. Wärmeisoliertes Leitungsrohr nach einem der vorangehenden Ansprüche, **dadurch gekennzeichnet, dass** die Vertiefung in der Wärmedämmschicht und dem Außenrohr über den Umfang verteilt einen ringförmigen Bereich (R) und einen schraubenlinienförmigen Bereich (S) aufweist.

5. Wärmeisoliertes Leitungsrohr nach Anspruch 4, **dadurch gekennzeichnet, dass** der Übergang vom ringförmigen auf den schraubenlinienförmigen Bereich einen sinusförmigen Verlauf aufweist.

6. Wärmeisoliertes Leitungsrohr nach Anspruch 4 oder 5, **dadurch gekennzeichnet, dass** der ringförmige Bereich einen Umfangswinkel von vorzugsweise 0 bis 30 Grad umfasst und zur Kennzeichnung der Lage von Mehrfachinnenrohren und der Entformbarkeit von zur Herstellung der Vertiefungen nötigen Formbackenhälften dient.

7. Verfahren zur Herstellung eines wärmeisolierten Leitungsrohres nach einem der vorangehenden Ansprüche, bei dem ein oder mehrere von einer Vorratstrommel(1) abgerollte Innenrohre (2) mit Abstand von einer zu einem Schlauch geformten Kunststofffolie (5) umhüllt werden, in den Raum zwischen dem bzw. den Innenrohren und Schlauch ein aufschäumbarer Kunststoff eingebracht wird und Innenrohr bzw. Innenrohre (2 )und Schlauch in ein aus mitlaufenden Formbackenhälften (9a,9b) bestehendes Formwerkzeug (9) eingefahren werden und anschließend ein Außenrohr (13) aus Kunststoff auch den Schlauch aufgebracht wird, wobei der Schlauch durch den aufschäumenden Kunststoff in ein an der inneren Oberfläche der geschlossenen Formbackenhälften befindliches Profil eingedrückt wird,
wobei die Formbackenhälften (9a,9b) des Formwerkzeuges (9) ein halbwellenartiges Formprofil aufweisen, das im Wesentlichen einer Trapezform entspricht,
**dadurch gekennzeichnet, dass** die kürzere der Parallelen der Trapezform durch eine Kettenlinie ersetzt ist.

8. Verfahren zur Herstellung eines wärmeisolierten Leitungsrohres nach Anspruch 7, **dadurch gekennzeichnet, dass** das halbwellenartige Formprofil über den Umfang verteilt einen ringförmigen Bereich (R) und einen schraubenlinienförmigen Bereich (S) aufweist.

9. Verfahren zur Herstellung eines wärmeisolierten Leitungsrohres nach Anspruch 8, **dadurch gekennzeichnet, dass** der ringförmige Bereich des Formprofils im Bereich der Formbackentrennebene der Formbackenhälften des Formwerkzeuges angeordnet ist.

10. Verfahren zur Herstellung eines wärmeisolierten Leitungsrohres nach einem der Ansprüche 7-9, **dadurch gekennzeichnet, dass** nach der Vorratstrommel (1)ein Richtrollensatz (3) und ein Führungsrohr (3a) angeordnet sind, wobei das Führungsrohr (3a) nahe dem Maschineneinlauf angeordnet ist und von einer Detektoreinheit (11) gesteuert wird, die die zentrale Lage des oder der Innenrohre in Bezug auf das fertige Leitungsrohr erfasst und bei Abweichungen Korrektursteuersignale abgibt.

11. Verfahren zur Herstellung eines wärmeisolierten Leitungsrohres nach einem der Ansprüche 7-10, **dadurch gekennzeichnet, dass** die Einformung des Außenmantels (13) nicht bis zum Grund der halbwellenartigen Vertiefung der Wärmedämmschicht (16) geht.

## Claims

1. Heat-insulated pipe, consisting of one or more inner pipes (1) made of plastics material or metal, an outer pipe (13) made of plastics material, as well as a plastics-foam-based thermally-insulating layer (16) arranged between the inner pipe (1) and the outer pipe (13), in which the inner pipe is a plastics pipe or metal pipe and wherein the thermally-insulating layer (16) and the outer pipe (13) possess an annular and/or helical depression in the outer sheathing,
wherein the depression in the thermally-insulating layer has, in longitudinal section, a half-wave-like form, which substantially corresponds to a trapezoidal form,
**characterised in that** the shorter of the parallels of the trapezoidal form is replaced by a caternary curve.

2. Heat-insulated pipe according to claim 1, **characterised in that** the ratio between the depth of the depression (H) and the diameter of the entire pipe (D) is preferably between 1 to 50 and 1 to 100.

3. Heat-insulated pipe according to one of the preceding claims, **characterised in that** the ratio E/A between the length (E) of the depression and the spacing (A) of the depressions on the circumference of the pipe is preferably less than 1 to 3.

4. Heat-insulated pipe according to one of the preceding claims, **characterised in that** the depression in the thermally-insulating layer and the outer pipe possesses an annular region (R) and a helically-formed region (S) distributed around the circumference.

5. Heat-insulated pipe according to claim 4, **characterised in that** the transition from the annular region to the helically-formed region follows a sine-formed curve.

6. Heat-insulated pipe according to claim 4 or 5, **characterised in that** the annular region covers a peripheral angle of preferably 0 to 30 degrees and serves to mark the position of multiple inner pipes and to facilitate demoulding from the moulding die halves required in order to produce the depressions.

7. Method for manufacturing a heat-insulated pipe according to one of the preceding claims, in which one or more inner pipes (2) rolled off a feed drum (1) are encased at a distance by a plastics film (5) formed into a hose, a foamable plastics material is introduced into the space between the inner pipe or pipes and hose and the inner pipe or pipes (2) and hose can be passed into a moulding tool (9) consisting of synchronously moving moulding die halves (9a, 9b) and an outer pipe (13) made of plastics material is then also applied to the hose, wherein the hose is pressed by the expanding plastics material into a profile on the inner surface of the closed moulding die halves,
wherein the moulding die halves (9a,9b) of the moulding tool (9) have a half-wave-like mould profile which substantially corresponds to a trapezoidal form,
**characterised in that** the shorter of the parallels of the trapezoidal form is replaced by a caternary curve.

8. Method for manufacturing a heat-insulated pipe according to claim 7, **characterised in that** the half-wave-like mould profile possesses an annular region (R) and a helically-formed region (S) distributed around the circumference.

9. Method for manufacturing a heat-insulated pipe according to claim 8, **characterised in that** the annular region of the mould profile is located in the region of the plane separating the moulding die halves of the moulding tool.

10. Method for manufacturing a heat-insulated pipe according to one of the claims 7-9, **characterised in that** a set of straightening rollers (3) and a guide pipe (3a) are arranged after the feed drum (1), wherein the guide pipe (3a) is arranged near the machine intake and is controlled by a detector unit (11), which detects the central position of the inner pipe or pipes in relation to the finished pipe and generates corrective control signals in the event of deviations.

11. Method for manufacturing a heat-insulated pipe according to one of the claims 7-10, **characterised in that** the forming of the outer sheathing (13) does not extend to the bottom of the half-wave-like depression of the thermally-insulating layer (16).

## Revendications

1. Tube isolé thermiquement, constitué d'un ou plusieurs tubes intérieurs (1) en matière plastique ou en métal, d'un tube extérieur (13) en matière plastique, ainsi que d'une couche d'isolation thermique (16), située entre le tube intérieur (1) et le tube extérieur (13), à base de mousse de matière plastique, dans lequel le tube intérieur est un tube en matière plastique ou un tube en métal et la couche d'isolation thermique (16) et le tube extérieur (13) comportent un renfoncement de forme annulaire et/ou de forme hélicoïdale dans l'enveloppe extérieure,
le renfoncement de la couche d'isolation thermique présente en coupe longitudinale une forme analogue à une demi-onde qui correspond sensiblement à une forme en trapèze,
**caractérisé en ce que** la plus courte des parallèles de la forme en trapèze est remplacée par une ligne en chaîne.

2. Tube isolé thermiquement selon la revendication 1,
**caractérisé en ce que** la profondeur du renfoncement (H) et le diamètre de la totalité du tube (D) sont de préférence dans un rapport de 1 à 50 jusqu'à 1 à 100.

3. Tube isolé thermiquement selon l'une des revendications précédentes,
**caractérisé en ce que** la longueur (E) du renfoncement et le pas (A) des renfoncements à la périphérie du tube sont de préférence dans un rapport E/A inférieur à 1 à 3.

4. Tube isolé thermiquement selon l'une des revendications précédentes,
**caractérisé en ce que** le renfoncement dans la couche d'isolation thermique et le tube extérieur présentent une zone de forme annulaire (R) et une zone de forme hélicoïdale (S), réparties sur la périphérie.

5. Tube isolé thermiquement selon la revendication 4,
**caractérisé en ce que** la transition de la zone de forme annulaire à la zone de forme hélicoïdale présente un tracé sinusoïdal.

6. Tube isolé thermiquement selon la revendication 4 ou 5,
**caractérisé en ce que** la zone de forme annulaire inclut un angle périphérique de préférence de 0 à 30° et sert à caractériser la position de tubes intérieurs multiples et au démoulage de moitiés de mâchoires de moules nécessaires pour la réalisation des renfoncements.

7. Procédé pour réaliser un tube isolé thermiquement selon l'une des revendications précédentes, dans lequel un ou plusieurs tubes intérieurs (2) déroulés depuis un tambour de réserve (1) sont enrobés par un film en matière plastique (5) mis sous la forme d'un tuyau, une matière plastique capable de mousser est introduite dans l'espace entre le ou les tube(s) intérieur(s) et le tuyau, et le tube intérieur ou les tubes intérieurs (2) et le tuyau sont introduits dans un outil de moulage (9) constitué de moitiés de mâchoires de moules (9a, 9b) qui se déplacent conjointement, et on amène ensuite un tube extérieur (13) en matière plastique sur le tuyau, dans lequel le tuyau est enfoncé par la matière plastique en cours de moussage dans un profil qui se trouve à la surface intérieure de moitiés de mâchoires de moules fermées,
dans lequel les moitiés de mâchoires de moules (9a, 9b) de l'outil de moulage (9) présentent un profil de moulage semblable à une demi-onde, qui correspond sensiblement à une forme en trapèze,
**caractérisé en ce que** la plus courte des parallèles de la forme en trapèze est remplacée par une ligne en chaîne.

8. Procédé pour réaliser un tube isolé thermiquement selon la revendication 7,
**caractérisé en ce que** le profil de moulage semblable à une demi-onde comporte une zone de forme annulaire (R) et une zone de forme hélicoïdale (S), réparties à la périphérie.

9. Procédé pour réaliser un tube isolé thermiquement selon la revendication 8,
**caractérisé en ce que** la zone de forme annulaire du profil de moulage est agencée dans la région du plan de séparation des mâchoires de moulage des moitiés de mâchoires de l'outil de moulage.

10. Procédé pour réaliser un tube isolé thermiquement selon l'une des revendications 7 à 9,
**caractérisé en ce qu'**un jeu de rouleaux de dressage (3) et un tube de guidage (3a) sont agencés après le tambour de réserve (1), dans lequel le tube de guidage (3a) est agencé à proximité de l'entrée dans la machine et est commandé par une unité à détecteur (11), qui détecte la position centrale du tube intérieur ou des tubes intérieurs par référence au tube fini, et délivre des signaux de commande de correction en cas de déviation.

11. Procédé pour réaliser un tube isolé thermiquement selon l'une des revendications 7 à 10,
**caractérisé en ce que** la déformation de l'enveloppe extérieure (13) vers l'intérieur ne va pas jusqu'au fond du renfoncement en forme de demi-onde de la couche d'isolation thermique (16).
